# FASCICULE DE BREVET EUROPEEN

(11) **EP 3 703 964 B1**
(45) Date de publication et mention de la délivrance du brevet: **06.04.2022**
(21) Numéro de dépôt: 18811599.2
(22) Date de dépôt: 30.10.2018
(51) Int. Cl.: B60H 3/02, F24F 6/12

(54) **SYSTEME DE NEBULISATION POUR VEHICULE AUTOMOBILE ET VEHICULE AUTOMOBILE COMPRENANT UN TEL SYSTEME**
ZERSTÄUBUNGSSYSTEM FÜR EIN KRAFTFAHRZEUG UND KRAFTFAHRZEUG MIT SOLCH EINEM SYSTEM
NEBULIZING SYSTEM FOR A MOTOR VEHICLE AND MOTOR VEHICLE COMPRISING SUCH A SYSTEM

(30) Priorité: 31.10.2017 FR 1760286
(43) Date de publication de la demande: 09.09.2020
(73) Titulaire: Valeo Systemes Thermiques, 78322 Le Mesnil Saint-Denis Cedex (FR)
(72) Inventeur: FEUILLARD, Vincent, 78322 Le Mesnil Saint-denis Cedex (FR); PETIT, Stéphane, 78322 Le Mesnil Saint-denis Cedex (FR)
(74) Mandataire: Valeo Systèmes Thermiques
(86) Numéro de dépôt international: PCT/FR2018/052697
(87) Numéro de publication internationale: WO 2019/086807

(56) Documents cités:
- WO-A1-2011/010382
- WO-A1-2016/097559
- WO-A1-2016/150822
- CN-U- 203 211 056
- JP-A- H06 183 253
- JP-A- H08 313 019

## Description

### Domaine de l'invention

L'invention concerne les véhicules et notamment les véhicules automobiles. L'invention concerne également les dispositifs thermiques des véhicules. Plus spécifiquement, l'invention concerne les systèmes de nébulisation de ces dispositifs thermiques.

### Arrière-plan technologique de l'invention

Un véhicule automobile comporte généralement un ou plusieurs dispositifs thermiques destinés notamment à réguler une température dans un habitacle du véhicule automobile. Par exemple, le véhicule automobile comprend un dispositif de ventilation, chauffage et/ou climatisation destiné à abaisser ou à élever la température régnant dans l'habitacle.

Le dispositif de climatisation de ventilation, chauffage et/ou climatisation comprend généralement au moins un aérateur situé sur un tableau de bord du véhicule automobile. Cet aérateur permet d'introduire, lorsque cela est nécessaire, de l'air froid dans l'habitacle. Ainsi, des passagers d'une plage arrière de l'habitacle sont situés à une distance de l'aérateur qui est plus importante que des passagers de la plage avant. C'est pourquoi, lorsque l'aérateur fournit un air froid à une température convenable pour les passagers de la plage avant, les passagers de la plage arrière peuvent ressentir une sensation de chaleur. Inversement, si le dispositif de climatisation fournit un air plus froid pour contenter les passagers de la plage arrière, les passagers de la plage avant peuvent être incommodés.

Pour réguler thermiquement l'habitacle et notamment à destination des passagers de la plage arrière, on a donc mis en place des systèmes de nébulisation. Un tel système comporte un réservoir d'eau liquide et une buse de nébulisation qui comporte un élément piézoélectrique d'émission d'ondes acoustiques et un concentrateur d'ondes acoustiques. L'élément piézoélectrique vibre de façon à émettre une onde acoustique et le concentrateur concentre cette onde. L'onde concentrée interagit avec de l'eau issue du réservoir.

Ainsi, l'eau quitte la buse de nébulisation sous la forme d'un brouillard de gouttelettes d'eau et d'un jet d'eau. Le brouillard de gouttelettes gagne l'habitacle du véhicule pour abaisser la température de l'habitacle, notamment dans une zone comprenant la plage arrière. En effet, la buse de nébulisation peut notamment être disposée à proximité d'une zone qui comprend la plage arrière. De tels systèmes de nébulisation présentent aussi l'avantage d'être plus écologiques que les systèmes de climatisation.

Cependant, ces systèmes de nébulisation s'insèrent mal dans l'architecture du véhicule automobile. En outre, l'accès au réservoir, par exemple à des fins de vidange, est complexe. Un système de nébulisation pour véhicule est connu du document WO 2016/150822 A1.

### Objet de l'invention

Un but de l'invention est de fournir un système de nébulisation pour véhicule automobile qui soit plus facile à maintenir, qui s'intègre mieux dans l'architecture d'un véhicule automobile, et permettant une vidange améliorée.

### Brève description de l'invention

Pour ce faire, on prévoit selon l'invention un système de nébulisation pour véhicule automobile, caractérisé en ce qu'il comprend :
- un premier réservoir d'eau liquide,
- un second réservoir d'eau liquide s'étendant à distance du premier réservoir, et
- une buse de nébulisation, en communication hydraulique avec le premier réservoir, la buse comportant un élément piézoélectrique d'émission d'ondes acoustiques,
le premier réservoir étant en communication hydraulique avec le second réservoir au moyen d'un premier conduit configuré pour permettre à l'eau de circuler du second réservoir vers le premier réservoir, le premier réservoir étant en outre en communication hydraulique avec une sortie d'eau liquide du système de nébulisation au moyen d'un second conduit, et dans lequel le premier conduit et le second conduit sont en communication hydraulique au moyen d'un troisième conduit.

Ainsi, on forme un circuit hydraulique qui permet de vidanger, au moyen du second conduit, les premier et second réservoirs. La maintenance du système de nébulisation est donc plus simple. De plus, comme le second réservoir est disposé à distance du premier réservoir, il est possible de disposer, à proximité de la zone d'émission du brouillard de gouttelettes d'eau, le premier réservoir d'une contenance relativement faible, par exemple de 0,1 litre, 0,2 litre, 0,3 litre ou 0,5 litre. Le premier réservoir a alors essentiellement une fonction de récupération du jet d'eau issu de la buse. Le premier réservoir forme en outre un réservoir « tampon » pour une boucle de recirculation du jet d'eau issu de la buse. Ainsi, le premier réservoir a de préférence une capacité la plus faible possible de façon à éviter le désamorçage du circuit de recirculation. Le second réservoir, disposé à distance, par exemple dans un coffre du véhicule, peut avoir une contenance de plusieurs litres. Ainsi, le second réservoir forme un réservoir de réserve pour le premier réservoir et s'étend à distance, dans une zone moins encombrée. Le système de nébulisation s'intègre donc mieux dans l'architecture du véhicule automobile.

Suivant l'invention, la communication hydraulique entre le permier conduit et le second conduit au moyen d'un troisième conduit permet de vidanger plus rapidement le second réservoir sans avoir besoin de faire circuler l'eau du second réservoir vers le permier réservoir avant de lui faire gagner la sortie d'eau liquide du système de nébulisation.

En outre, dans divers modes de réalisation de l'invention, on peut avoir également recours à l'une et/ou à l'autre des dispositions suivantes :
- la buse comporte un concentrateur des ondes acoustiques émises par l'élément piézoélectrique configuré de sorte que l'eau issue du premier réservoir forme un jet d'eau et un brouillard de gouttelettes d'eau en sortie de la buse, le brouillard étant destiné à quitter la buse pour gagner un habitacle du véhicule automobile,
- le troisième conduit comprend une vanne deux voies permettant de définir un sens de circulation de l'eau liquide dans le troisième conduit ; la fiabilité du système de nébulisation est ainsi accrue ;
- le premier réservoir est en communication hydraulique avec la buse au moyen d'un quatrième conduit comprenant une première extrémité reliée à la buse et une seconde extrémité reliée au premier réservoir; le quatrième conduit comprend une vanne deux voies permettant de définir un sens de circulation de l'eau liquide dans le quatrième conduit;
- le quatrième conduit comprend une pompe hydraulique apte à faire circuler de l'eau du premier réservoir vers la buse et vers la sortie d'eau liquide du système de nébulisation ;
- le second conduit comprend une vanne deux voies permettant de définir un sens de circulation de l'eau liquide dans le second conduit ; la fiabilité du système de nébulisation est ainsi accrue ;
- le premier réservoir est en communication hydraulique avec la buse au moyen d'un cinquième conduit et disposé de sorte que le jet d'eau issu de la buse gagne le premier réservoir ; on récupère ainsi le jet d'eau émis conjointement avec le brouillard de gouttelettes d'eau ;
- le premier réservoir comporte un capteur de niveau bas ;
- le premier conduit comprend une pompe hydraulique ;
- le capteur de niveau bas est configuré pour activer la pompe hydraulique lorsqu'un niveau d'eau du premier réservoir actionne le capteur de niveau bas ;
- le premier réservoir comporte un capteur de niveau haut ;
- le capteur de niveau haut est configuré pour désactiver la pompe hydraulique lorsqu'un niveau d'eau du premier réservoir actionne le capteur de niveau haut ;
- le second réservoir présente une contenance supérieure à celle du premier réservoir ;
- le second réservoir comprend une entrée d'eau liquide qui est de préférence une entrée d'eau liquide pour le système de nébulisation,
- l'entrée d'eau liquide comporte un filtre à eau ;
- le second réservoir comprend un capteur de niveau bas ;
- le système de nébulisation comprend un conduit d'entraînement configuré pour diriger le brouillard de gouttelettes d'eau quittant la buse vers l'habitacle du véhicule automobile ;
- le système de nébulisation comporte un ventilateur en communication aéraulique avec le conduit d'entraînement et configuré pour émettre dans la cheminée un flux d'air dans un sens d'émission du brouillard de gouttelettes d'eau vers l'habitacle du véhicule automobile ;
- le système de nébulisation comprend un module de commande électronique.
- le système de nébulisation comprend une dérivation disposée entre le troisième conduit, le second conduit et la sortie d'eau liquide du système de nébulisation.
- le système de nébulisation comporte une dérivation disposée entre une branche complémentaire du premier conduit, qui comporte une pompe hydraulique, une seconde branche du premier conduit et le troisième conduit.
- le système de nébulisation comprend une dérivation disposée entre une branche complémentaire du quatrième conduit, qui comporte de préférence une pompe hydraulique, une seconde branche du quatrième conduit et le deuxième conduit ; de nouveau, on peut donc vidanger plus rapidement de l'eau de la buse de nébulisation en la faisant atteindre plus rapidement le second conduit relié à la sortie d'eau liquide du système de nébulisation ;

On prévoit également selon l'invention un dispositif de ventilation, chauffage et/ou climatisation pour véhicule automobile, comprenant un système de nébulisation tel que décrit ci-dessus.

On prévoit aussi selon l'invention un habitacle de véhicule automobile comprenant un dispositif de ventilation, chauffage et/ou climatisation tel que mentionné ci-dessus.

### Brève description des dessins

On va maintenant décrire, à titre d'exemples non limitatifs, deux modes de réalisation de l'invention à l'aide des figures suivantes :
- la figure 1 illustre schématiquement un système de nébulisation selon un premier mode de réalisation de l'invention, et
- la figure 2 représente schématiquement un système de nébulisation selon un second mode de réalisation de l'invention.

### Description détaillée de deux modes de réalisation de l'invention

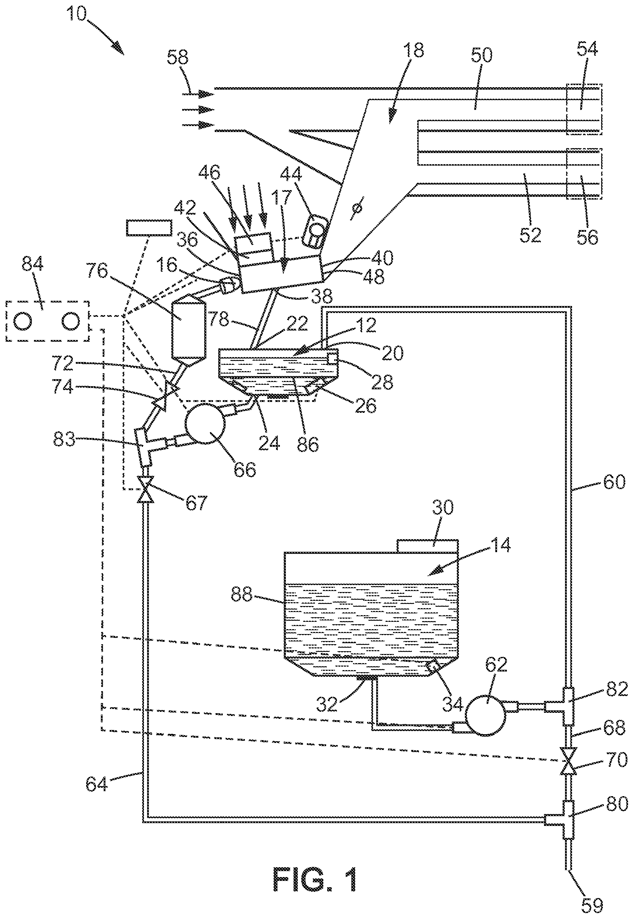

On a représenté sur la figure 1 un système de nébulisation 10 selon un mode de réalisation de l'invention. Le système de nébulisation 10 fait partie d'un dispositif thermique d'un habitacle de véhicule automobile destiné à abaisser une température régnant dans l'habitacle et plus précisément dans une zone qui comprend une plage arrière de l'habitacle. On notera que selon l'invention, le dispositif de nébulisation peut être destiné à abaisser une température de toute zone de l'habitacle et notamment de l'ensemble de l'habitacle lui-même. On notera par ailleurs que selon l'invention, le dispositif thermique comprenant le système de nébulisation 10 peut être disposé dans tout type de véhicule.

Le système de nébulisation 10 comporte un premier réservoir 12 d'eau liquide, un second réservoir 14 d'eau liquide, une buse de nébulisation, un premier conduit d'entraînement 17 et un second conduit d'entraînement 18 pour le liquide nébulisé.

Le premier réservoir 12 comprend une première entrée 20 d'eau liquide, une seconde entrée 22 d'eau liquide et une sortie 24 d'eau liquide. La seconde entrée 22 d'eau liquide permet de récupérer de l'eau liquide depuis le premier conduit d'entraînement 17 comme il sera décrit plus loin. De plus, le premier réservoir 12 comporte un capteur de niveau bas 26 et un capteur de niveau haut 28 en eau liquide. Ces capteurs de niveau bas 26 et de niveau haut 28 peuvent être de tout type et notamment électroniques. Le premier réservoir 12 a une contenance égale à 0,25 litre. Selon une variante du premier mode de réalisation, le premier réservoir 12 peut avoir une contenance égale à 0,1 litre, 0,3 litre ou encore 0,5 litre.

Le second réservoir 14 comporte une entrée 30 d'eau liquide. Cette entrée 30 d'eau liquide est aussi une entrée d'eau liquide pour le système de nébulisation 10. L'entrée 30 d'eau liquide comprend un filtre à eau destiné à filtrer l'eau qui entre dans le second réservoir 14 et donc dans le système de nébulisation 10. On notera que ce filtre à eau est optionnel. L'entrée 30 d'eau liquide peut aussi comprendre un capteur de niveau haut pour le second réservoir 14. On notera que selon des variantes du présent mode de réalisation, l'entrée 30 peut comprendre tout type de moyens indiquant que le second réservoir 14 est plein. Par exemple, l'entrée 30 comprend un plongeur ou un flotteur à tige. En outre, le second réservoir 14 comporte un capteur de niveau bas 34. Le second réservoir 14 comporte aussi une sortie 32 d'eau liquide. Par ailleurs, le second réservoir 14 présente une contenance supérieure à celle du premier réservoir 12, à savoir de plusieurs litres et notamment égale à 1, 5 litre, 2 litres, 3 litres, 4 litres ou 5 litres. Le second réservoir 14 peut notamment se présenter sous la forme d'une bouteille.

Le premier conduit d'entraînement 17 comporte une entrée 36 d'eau liquide et de brouillard de gouttelettes d'eau, une sortie 38 d'eau liquide et une sortie 40, se présentant sous la forme d'une section du premier conduit d'entraînement 17, de brouillard de gouttelettes d'eau et d'air. De plus, le système de nébulisation 10 comprend un ventilateur 42 disposé entre un filtre à air 46 et une entrée d'air du premier circuit d'entraînement 17. Le ventilateur 42 est ainsi configuré pour émettre un flux d'air filtré dans le premier conduit d'entraînement 17.

La buse de nébulisation 16 comprend, de façon connue en soi, un élément piézoélectrique d'émission d'ondes acoustiques, relié à un générateur électrique, et un concentrateur d'ondes acoustiques. L'élément piézoélectrique, qui peut notamment comprendre un quartz, vibre lorsqu'il est alimenté électriquement par le générateur électrique. Le concentrateur d'ondes acoustiques est agencé pour concentrer des ondes acoustiques émises par l'élément piézoélectrique. Ainsi, le concentrateur d'ondes acoustiques peut notamment avoir une forme convergente. De plus, la buse de nébulisation comporte un filtre à eau 76, disposé en amont d'une entrée d'eau de la buse de nébulisation 16 et qui a pour fonction de filtrer de l'eau entrant dans la buse de nébulisation 16.

Le second conduit d'entraînement 18 est disposé à la suite du premier conduit d'entraînement 17. Le second conduit d'entraînement 18 comprend ainsi une entrée 48 de brouillard de gouttelettes d'eau qui coïncide avec la sortie 40 de brouillard de gouttelettes d'eau et d'air du premier conduit d'entraînement 17. Ce second conduit d'entraînement 18 comprend deux branches 50, 52 distinctes qui comportent chacune une sortie respectivement 54, 56 de brouillard de gouttelettes d'eau et d'air. Le second conduit d'entraînement 18 forme un divergent. Les sorties 54, 56 débouchent dans des aérateurs d'un système de climatisation du véhicule. Ainsi, le brouillard de gouttelettes d'eau peut gagner des aérateurs du système de climatisation du véhicule pour gagner l'habitacle du véhicule. En outre, le second conduit d'entraînement comprend un actionneur 44 commandant un volet disposé dans le second conduit d'entraînement 18 qui permet de doser la répartition du brouillard de gouttelettes d'eau entre les deux branches 50, 52.

En outre, on a représenté, à l'aide de trois flèches 58, un flux d'air, qui peut atteindre jusqu'à 120 m³ par heure. Ce flux d'air est généré par le système de climatisation qui fournit par ailleurs de l'air froid à l'habitacle du véhicule par l'intermédiaire des aérateurs. Ce flux d'air et le brouillard de gouttelettes d'eau ne se rencontrent qu'en sortie des aérateurs.

De plus, le système de nébulisation 10 comporte une sortie 59 d'eau liquide qui est aussi une sortie d'eau liquide pour le système de nébulisation 10. Cette sortie 59 d'eau liquide peut notamment être une sortie de vidange pour le système de nébulisation 10.

On va maintenant décrire des connexions hydrauliques entre le premier réservoir 12, le second réservoir 14, la buse de nébulisation 16 et le conduit d'entraînement 18.

Le premier réservoir 12 est en communication hydraulique avec le second réservoir 14 au moyen d'un premier conduit 60. Plus spécifiquement, la sortie 32 d'eau liquide du second réservoir 14 est directement reliée, par l'intermédiaire du premier conduit 60, à la première entrée 20 d'eau liquide du premier réservoir 12. En outre, le premier conduit 60 comporte une pompe hydraulique 62 configurée pour faire circuler de l'eau dans le premier conduit 60.

La sortie 24 d'eau liquide du premier réservoir 12 est en communication hydraulique avec la sortie 59 d'eau liquide au moyen d'un second conduit 64. Le second conduit 64 comprend aussi une vanne deux voies 67.

Le premier conduit 60 et le second conduit 64 sont en communication hydraulique au moyen d'un troisième conduit 68. Le troisième conduit comporte également une vanne deux voies 70.

Le premier réservoir 12 est en communication hydraulique avec la buse de nébulisation 16. Premièrement, la sortie 24 d'eau liquide du premier réservoir 12 est reliée à l'entrée d'eau liquide de la buse de nébulisation 16 au moyen d'un quatrième conduit 72. Le quatrième conduit 72 comprend une vanne deux voies 74. Il comporte de plus une première extrémité reliée à la buse de nébulisation 16 et une seconde extrémité reliée à la sortie 24 d'eau liquide du premier réservoir 12. Le quatrième conduit 72 comporte aussi le filtre 76 destiné à accroître la sécurité du système de nébulisation 10. En second lieu, la seconde entrée d'eau 22 liquide du premier réservoir 12 est en communication hydraulique avec la première sortie 38 d'eau du premier conduit d'entraînement 17 au moyen d'un cinquième conduit 78. En outre, le quatrième conduit 72 comporte une pompe hydraulique 66 configurée pour faire circuler de l'eau dans le quatrième conduit 72, dans le filtre 76 et dans la buse de nébulisation 16.

Par ailleurs, le système de nébulisation 10 comprend une première dérivation 80 disposée entre le troisième conduit 68, le second conduit 64 et la sortie 59 d'eau liquide du système de nébulisation 10. De même, le système de nébulisation 10 comporte une deuxième dérivation 82 disposée entre une branche complémentaire du premier conduit 60 qui comporte la pompe hydraulique 62, une seconde branche du premier conduit 60 et le troisième conduit 68. Enfin, le système de nébulisation 10 comprend une troisième dérivation 83 disposée entre une branche complémentaire du quatrième conduit 72 qui comporte la pompe hydraulique 66, une seconde branche du quatrième conduit 72 et le deuxième conduit 64.

En outre, on notera que le système de nébulisation 10 comporte un module de commande électronique 84. Le module de commande électronique 84 commande le système de nébulisation 10. Il peut être automatisé ou alors être commandé par un système électronique du véhicule automobile. Il est notamment relié, comme indiqué par les lignesen pointillés sur la figure 1, au capteur de niveau bas 26 du premier réservoir 12, au capteur de niveau bas 34 du second réservoir 14, à l'actionneur 44, aux pompes hydrauliques 62, 66 et aux vannes deux voies 67, 70, 74. De plus, le module de commande électronique 84 peut aussi être relié au capteur de niveau haut 28 du premier réservoir 12, et au capteur de niveau haut du second réservoir 14 et au ventilateur 42. Ces liaisons sont effectuées par exemple au moyen de câbles électriques.

On notera par ailleurs que le premier réservoir 12 peut être disposé à proximité des sorties 54, 56 de brouillard de gouttelettes d'eau et d'air du conduit d'entraînement 18. Ainsi, le premier réservoir 12 peut notamment être disposé sous un plancher de l'habitacle du véhicule ou encore dans une console disposée entre deux sièges avant de l'habitacle. Le second réservoir 14 s'étend à distance du premier réservoir 12 et peut notamment être disposé dans un coffre du véhicule automobile et être accessible à des utilisateurs du véhicule.

On va maintenant décrire un fonctionnement du système de nébulisation 10.

Le premier réservoir 12 renferme une masse d'eau 86 et le second réservoir 14 renferme une masse d'eau 88.

Lorsqu'il est requis, par un utilisateur du véhicule ou le système électronique du véhicule automobile, d'abaisser une température de la zone de l'habitacle qui comprend la plage arrière, le module de commande électronique 84 actionne la pompe hydraulique 66, la vanne deux voies 74 et la vanne deux voies 67, de sorte que de l'eau liquide passe du premier réservoir 12 à la buse de nébulisation 16 en circulant dans le quatrième conduit 72.

Puis, le module de commande électronique 84 actionne le générateur électrique de la buse de nébulisation 16. Ce générateur actionne l'élément piézoélectrique de façon à produire une onde acoustique. Cette onde acoustique est concentrée par le concentrateur d'ondes acoustique et interagit avec l'eau contenue dans la buse de nébulisation 16 de façon à générer, en sortie de la buse de nébulisation 16 un brouillard de gouttelettes d'eau et un jet d'eau. Le brouillard de gouttelettes d'eau est ainsi émis dans le premier conduit d'entraînement 17.

Simultanément, le module de commande électronique 84 actionne le ventilateur 42de façon à générer le flux d'air qui dirige le brouillard de gouttelettes d'eau dans le second conduit d'entraînement 18 et dans au moins l'une des deux branches 50, 52, jusqu'aux deux sorties 54, 56 du second conduit d'entraînement 18 de sorte que le brouillard de gouttelettes d'eau gagne la zone de l'habitacle du véhicule automobile qui comprend la plage arrière.

Ainsi, le concentrateur d'ondes acoustiques est configuré de sorte que l'eau issue du premier réservoir 12 forme un jet d'eau et un brouillard de gouttelettes d'eau en sortie de la buse de nébulisation. Le brouillard est ainsi destiné à quitter la buse de nébulisation 16 pour gagner l'habitacle du véhicule automobile. De même, le premier conduit d'entraînement 17 et le second conduit d'entraînement 18 sont configurés pour diriger le brouillard de gouttelettes d'eau quittant la buse de nébulisation 16 vers l'habitacle du véhicule automobile. En outre, le ventilateur 42 est configuré pour émettre le flux d'air dans le sens d'émission du brouillard de gouttelettes d'eau vers l'habitacle du véhicule automobile.

Parallèlement, le jet d'eau issu de la buse de nébulisation 16 gagne le premier conduit d'entraînement 17 et le cinquième conduit 78 de façon à gagner le premier réservoir 12. Ainsi, le cinquième conduit 78 est disposé de sorte que le jet d'eau issu du concentrateur d'ondes acoustiques gagne le premier réservoir 12. On notera que selon une variante du présent mode de réalisation, on pourra en outre prévoir un conduit entre la buse de nébulisation 16 et le premier réservoir 12 dont la fonction est la même que celle du cinquième conduit 78.

De plus, lorsque le niveau en eau liquide du premier réservoir 12 atteint le niveau bas, le capteur de niveau bas 26 est actionné. Ainsi, par l'intermédiaire du module de commande électronique 84, le capteur de niveau bas 26 active la pompe hydraulique 62. Ainsi, de l'eau circule du second réservoir 14 vers le premier réservoir 12 dans le premier conduit 60 de façon à remplir le premier réservoir 12. Ainsi, le capteur de niveau bas 26 du premier réservoir 12 est configuré pour activer la pompe hydraulique 62 lorsque le niveau d'eau dans le premier réservoir 12 est tel qu'il actionne le capteur de niveau bas 26, c'est-à-dire lorsqu'un niveau bas est mesuré par ledit capteur. C'est donc le capteur de niveau bas 26 du premier réservoir 12 qui commande la pompe hydraulique 62 disposée en sortie du second réservoir 14. De même, le premier conduit 60 est notamment configuré pour permettre à de l'eau de circuler du second réservoir 14 vers le premier réservoir 12.

Lorsque le niveau en eau liquide du premier réservoir 12 atteint le niveau haut, le capteur de niveau haut 28 est actionné. En conséquence, par l'intermédiaire du module de commande électronique 84, la pompe hydraulique 62 est désactivé de sorte que le remplissage du premier réservoir 12 cesse. Ainsi, le capteur de niveau haut 28 du premier réservoir 12 est configuré pour désactiver la pompe hydraulique 62 lorsque le niveau d'eau dans le premier réservoir 12 est tel qu'il actionne le capteur de niveau haut 28. Le capteur de niveau haut 28 du premier réservoir 12 qui commande la pompe hydraulique 62 disposée en sortie du second réservoir 14.

Lorsque le niveau en eau liquide dans le second réservoir 14 atteint le niveau bas, le capteur de niveau bas 34 du second réservoir 14 est actionné. Ainsi, le module de commande électronique 84 interagit avec le système électronique du véhicule pour par exemple actionner un voyant lumineux sur une planche de bord du véhicule pour indiquer aux utilisateurs du véhicule automobile qu'il est nécessaire de remplir le second réservoir 14.

Lorsqu'une vidange du système de nébulisation 10 est requise, le module de commande électronique 84 actionne la pompe hydraulique 62 et la vanne deux voies 70. Ainsi, la masse d'eau 88 dans le second réservoir 14 gagne le premier conduit 60, le troisième conduit 68 et la sortie 59 d'eau liquide. De même, le module de commande électronique 84 actionne la pompe hydraulique 66 et la vanne deux voies 67. Ainsi, la masse d'eau 86 dans le premier réservoir 12 gagne le second conduit 64 puis la sortie 59 d'eau liquide. Ainsi, le système de nébulisation 10 est vidangé.

Alternativement, le système de nébulisation 10 peut aussi être vidangé par gravité. Dans ce cas, le système de nébulisation 10, et notamment les premier 60 et second 64 conduits, sont disposés de sorte que le circuit de vidange, décrit ci-dessus, ne comprenne qu'un seul point bas, à savoir la sortie 59 d'eau liquide.

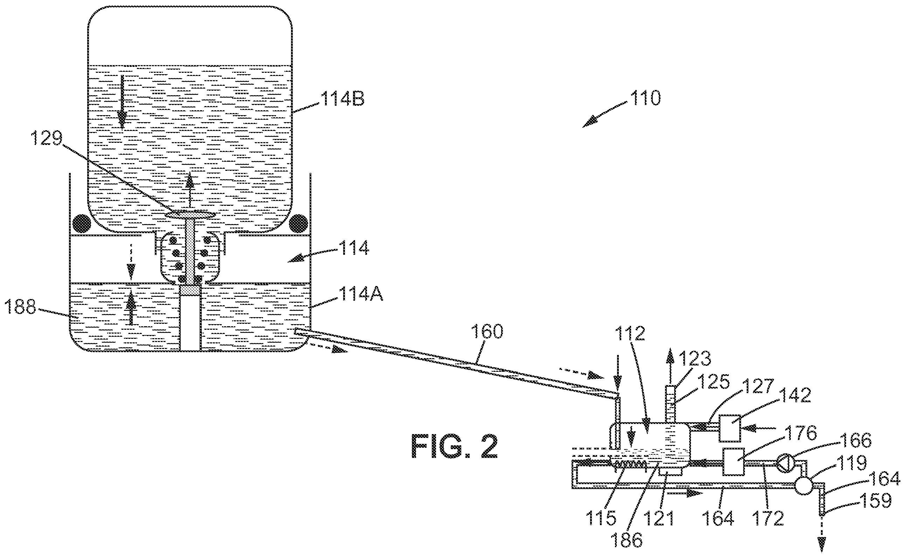

On va maintenant décrire un système de nébulisation 110 selon un seconde mode de réalisation, à l'aide de la figure 2. Seules les différences avec le premier mode vont être explicitées. En outre, les éléments similaires à ceux du premier mode se voient affectés d'une même référence numérique augmentée de 100.

Comme illustré sur la figure 2, le système de nébulisation 110 comporte un premier réservoir 112 et un second réservoir 114 qui s'étend à distance du premier réservoir 112. Le premier réservoir 112 est disposé sur une console centrale du véhicule. En outre, le second réservoir 114 est disposé dans un coffre du véhicule. Le premier 112 et le second 114 réservoirs sont reliés au moyen d'un premier conduit 160. On notera que selon une direction verticale, le premier réservoir 112 est situé sous la second réservoir 114 de sorte que le second réservoir 114 alimente le premier réservoir 112 par gravité.

En outre, le second réservoir 114 comporte une cuve 114A fixe par rapport au premier réservoir 112 et un réservoir auxiliaire amovible 114B qui se présente par exemple sous la forme d'une bouteille d'eau. La cuve 114A et le réservoir auxiliaire amovible 114B sont en communication hydraulique. De plus, la cuve 114A comprend un bouton poussoir 129 qui a pour fonction, lorsqu'il est actionné, de permettre à l'eau du réservoir auxiliaire amovible 114B de gagner la cuve 114A. Un utilisateur du système de nébulisation 110 peut donc fournir de l'eau au système 110 facilement en ôtant le réservoir auxiliaire amovible 114B et en le remplissant d'eau.

Le système de nébulisation 110 comprend une sortie 159 d'eau liquide qui est une sortie d'eau liquide pour le système de nébulisation 110. Le premier réservoir 112 est en communication hydraulique avec la sortie 159 d'eau liquide du système de nébulisation 110 au moyen d'un second conduit 164.

En outre, le premier réservoir 112 comprend des moyens de chauffage qui se présentent ici sous la forme d'une résistance chauffante 115. La résistance chauffante 115 a pour fonction de stériliser par chauffage de l'eau 186 du premier réservoir 112, notamment avant qu'elle ne gagne le second conduit 164.

En outre, le second conduit 164 comprend une électrovanne 119 qui a pour fonction de former une dérivation du second conduit 164. En effet, comme illustré sur la figure 2, le système de nébulisation 110 comporte un conduit de dérivation 172, dont la fonction est analogue à celle du quatrième conduit 72 du premier mode de réalisation, qui comprend une première extrémité reliée à l'électrovanne 119 et une seconde extrémité qui débouche dans le premier réservoir 112. De plus, le conduit de dérivation 172 comprend une pompe hydraulique 166 et un filtre 176. La seconde extrémité du conduit de dérivation 172 débouche dans le premier réservoir 112 à proximité d'un élément piézoélectrique 121. En regard de l'élément piézoélectrique 121, le système de nébulisation 110 comporte un conduit d'émission 123 et qui est relié à au moins un conduit d'entraînement, non illustré, qui conduit lui-même, de façon similaire à ce qui indiqué dans la description du premier mode de réalisation, vers des aérateurs. Le conduit d'émission 123 a pour fonction de concentrer un jet d'eau 125 émis lors de l'action de l'élément piézoélectrique 121 comme également indiqué précédemment. Une partie de ce jet d'eau 125 retombe par gravité dans le premier réservoir 112 et une autre partie, moins importante, est nébulisée et forme un brouillard de gouttelettes d'eau.

En outre, le système de nébulisation 110 comporte aussi un ventilateur 142 qui est apte à émettre un flux d'air dans un conduit d'aération 127. Ce conduit d'aération 127 débouche dans le premier réservoir 112 à proximité du conduit d'émission 123. Ainsi, le flux d'air émis par le ventilateur 142 se dirige dans le conduit d'émission 123 et contribue à diriger le brouillard de gouttelettes d'eau dans l'au moins un conduit d'entraînement. Dans ce mode de réalisation, il est aussi possible de prévoir un filtre à air disposé en amont du ventilateur 142.

Ainsi, on notera que l'électrovanne permet de diriger de l'eau stérilisée qui quitte le premier réservoir 112 vers la sortie 159 d'eau liquide du système de nébulisation 110 ou vers le conduit de dérivation 172 pour qu'elle soit nébulisée.

On notera aussi que de nouveau, le premier réservoir 112 forme un réservoir de récupération du jet d'eau formé par l'élément piézoélectrique 121.

Bien entendu, on pourra apporter à l'invention de nombreuses modifications sans sortir du cadre de celle-ci.

On pourra notamment utiliser un premier réservoir 12 et un second réservoir 14 qui ont des formes et des contenances de tout ordre.

On pourra également ajouter un troisième, voire un quatrième réservoirs dont les fonctions sont analogues à celle du second réservoir 14.

On pourra aussi disposer dans le système de nébulisation 10 un ou plusieurs autres pompes hydrauliques afin de renforcer la fiabilité du système de nébulisation 10.

Le premier réservoir 12 peut être placé au même niveau, en référence à la direction verticale, que le second réservoir 14. De préférence, le premier réservoir 12 est disposé en dessous du second réservoir 14, selon cette direction verticale, lorsque le système de nébulisation 10 est en conditions normales d'utilisation.

## Revendications

1. Système de nébulisation (10 ; 110) pour véhicule automobile, comprenant
- un premier réservoir (12; 112) d'eau liquide (86; 186),
- un second réservoir (14; 114) d'eau liquide (88; 188) s'étendant à distance du premier réservoir (12 ; 112), et
- une buse de nébulisation (16), en communication hydraulique avec le premier réservoir (12; 112), la buse (16) comportant un élément piézoélectrique (121) d'émission d'ondes acoustiques,
le premier réservoir (12 ; 112) étant en communication hydraulique avec le second réservoir (14 ; 114) au moyen d'un premier conduit (60 ; 160) configuré pour permettre à l'eau (88 ; 188) de circuler du second réservoir (14 ; 114) vers le premier réservoir (12 ; 112), le premier réservoir (12 ; 112) étant en outre en communication hydraulique avec une sortie (59 ; 159) d'eau liquide du système de nébulisation (10 ; 110) au moyen d'un second conduit (64; 164), le système de nébulisation étant **caractérisé en ce que** le premier conduit (60) et le second conduit (64) sont en communication hydraulique au moyen d'un troisième conduit (68).

2. Système de nébulisation (10) selon la revendication précédente, dans lequel la buse comporte un concentrateur des ondes acoustiques émises par l'élément piézoélectrique (121) configuré de sorte que l'eau (86 ; 186) issue du premier réservoir (12 ; 112) forme un jet d'eau (125) et un brouillard de gouttelettes d'eau en sortie de la buse, le brouillard étant destiné à quitter la buse (16) pour gagner un habitacle du véhicule automobile,

3. Système de nébulisation (10) selon la revendication 1 ou 2, dans lequel le premier conduit (60) comprend une pompe hydraulique (62).

4. Système de nébulisation (10) selon la revendication précédente, comportant une dérivation (82) disposée entre une branche complémentaire du premier conduit (60), qui comporte la pompe hydraulique (62), une seconde branche du premier conduit (60) et le troisième conduit (68).

5. Système de nébulisation (10) selon l'une des revendications 3 ou 4, dans lequel le premier réservoir (12) comporte un capteur de niveau bas (26) configuré pour activer la pompe hydraulique (62) lorsqu'un niveau d'eau (86) du premier réservoir (12) actionne le capteur de niveau bas (26).

6. Système de nébulisation (10 ; 110) selon l'une des revendications précédentes, dans lequel le second réservoir (14 ; 114) présente une contenance supérieure à celle du premier réservoir (12 ; 112).

7. Système de nébulisation (10) selon l'une quelconque des revendications précédentes, dans lequel le second réservoir (14) comprend une entrée (30) d'eau liquide qui est de préférence une entrée d'eau liquide pour le système de nébulisation (10), l'entrée (30) d'eau liquide comportant de préférence un filtre à eau.

8. Système de nébulisation (10) selon l'une quelconque des revendications précédentes, comprenant un module de commande électronique (84).

9. Dispositif de ventilation, chauffage et/ou climatisation pour véhicule automobile, comprenant un système de nébulisation (10; 110) selon l'une quelconque des revendications précédentes.

## Patentansprüche

1. Zerstäubungsystem (10; 110) für ein Kraftfahrzeug, umfassend
- einen ersten Vorratsbehälter (12; 112) für flüssiges Wasser (86; 186),
- einen zweiten Vorratsbehälter (14; 114) für flüssiges Wasser (88; 188), der sich in einem Abstand vom ersten Vorratsbehälter (12; 112) erstreckt, und
- eine Zerstäubungsdüse (16) in hydraulischer Verbindung mit dem ersten Vorratsbehälter (12; 112), wobei die Düse (16) ein piezoelektrisches Element (121) zur Aussendung von Schallwellen aufweist,
wobei der erste Vorratsbehälter (12; 112) mittels einer ersten Leitung (60; 160) mit dem zweiten Vorratsbehälter (14; 114) in hydraulischer Verbindung steht, die dazu ausgebildet ist, es dem Wasser (88; 188) zu gestatten, vom zweiten Vorratsbehälter (14; 114) zum ersten Vorratsbehälter (12; 112) zu zirkulieren, wobei der erste Vorratsbehälter (12; 112) ferner mittels einer zweiten Leitung (64; 164) mit einem Austritt (59; 159) für flüssiges Wasser des Zerstäubungsystems (10; 110) in hydraulischer Verbindung steht, wobei das Zerstäubungsystem **dadurch gekennzeichnet ist, dass** die erste Leitung (60) und die zweite Leitung (64) mittels einer dritten Leitung (68) in hydraulischer Verbindung stehen.

2. Zerstäubungsystem (10) nach dem vorhergehenden Anspruch, wobei die Düse einen Konzentrator der Schallwellen aufweist, die vom piezoelektrischen Element (121) ausgesendet werden, der so ausgebildet ist, dass das Wasser (86; 186) aus dem ersten Vorratsbehälter (12; 112) einen Wasserstrahl (125) und einen Nebel aus Wassertröpfchen am Austritt der Düse bildet, wobei der Nebel dazu bestimmt ist, die Düse (16) zu verlassen, um einen Insassenraum des Kraftfahrzeugs zu erreichen,

3. Zerstäubungsystem (10) nach Anspruch 1 oder 2, wobei die erste Leitung (60) eine hydraulische Pumpe (62) umfasst.

4. Zerstäubungsystem (10) nach dem vorhergehenden Anspruch, das eine Abzweigung (82) aufweist, die zwischen einem ergänzenden Zweig der ersten Leitung (60), der die hydraulische Pumpe (62) aufweist, einem zweiten Zweig der ersten Leitung (60) und der dritten Leitung (68) angeordnet ist.

5. Zerstäubungsystem (10) nach einem der Ansprüche 3 oder 4, wobei der erste Vorratsbehälter (12) einen Niedrigfüllstandsensor (26) aufweist, der dazu ausgebildet ist, die hydraulische Pumpe (62) zu aktivieren, wenn ein Füllstand von Wasser (86) des ersten Vorratsbehälters (12) den Niedrigfüllstandsensor (26) auslöst.

6. Zerstäubungsystem (10; 110) nach einem der vorhergehenden Ansprüche, wobei der zweite Vorratsbehälter (14; 114) ein Fassungsvermögen aufweist, das größer als das des ersten Vorratsbehälters (12; 112) ist.

7. Zerstäubungsystem (10) nach einem der vorhergehenden Ansprüche, wobei der zweite Vorratsbehälter (14) einen Eintritt (30) für flüssiges Wasser umfasst, der vorzugsweise ein Eintritt für flüssiges Wasser für das Zerstäubungsystem (10) ist, wobei der Eintritt (30) für flüssiges Wasser vorzugsweise einen Wasserfilter aufweist.

8. Zerstäubungsystem (10) nach einem der vorhergehenden Ansprüche, umfassend ein elektronisches Steuerungsmodul (84).

9. Belüftungs-, Heizungs- und/oder Klimasteuerungsvorrichtung für ein Kraftfahrzeug, umfassend ein Zerstäubungsystem (10; 110) nach einem der vorhergehenden Ansprüche.

## Claims

1. Nebulizing system (10; 110) for a motor vehicle, comprising:
- a first reservoir (12; 112) of liquid water (86; 186),
- a second reservoir (14; 114) of liquid water (88; 188) extending at a distance from the first reservoir (12; 112), and
- a nebulizing nozzle (16), in hydraulic communication with the first reservoir (12; 112), the nozzle (16) including a piezoelectric element (121) for emitting acoustic waves,
the first reservoir (12; 112) being in hydraulic communication with the second reservoir (14; 114) by means of a first pipe (60; 160) configured to allow the water (88; 188) to circulate from the second reservoir (14; 114) to the first reservoir (12; 112), the first reservoir (12; 112) also being in hydraulic communication with a liquid water outlet (59; 159) of the nebulizing system (10; 110) by means of a second pipe (64; 164), the nebulizing system being **characterized in that** the first pipe (60) and the second pipe (64) are in hydraulic communication by means of a third pipe (68).

2. Nebulizing system (10) according to the previous claim, in which the nozzle includes a concentrator for the acoustic waves emitted by the piezoelectric element (121) configured so that the water (86; 186) coming from the first reservoir (12; 112) forms a water jet (125) and a water droplet mist at the outlet of the nozzle, the mist being capable of leaving the nozzle (16) in order to reach a passenger compartment of the motor vehicle,

3. Nebulizing system (10) according to Claim 1 or 2, in which the first pipe (60) comprises a hydraulic pump (62) .

4. Nebulizing system (10) according to the previous claim, including a bypass (82) arranged between an additional branch of the first pipe (60), which includes the hydraulic pump (62), a second branch of the first pipe (60) and the third pipe (68).

5. Nebulizing system (10) according to one of Claims 3 and 4, in which the first reservoir (12) includes a low level sensor (26) configured to activate the hydraulic pump (62) when a water level (86) in the first reservoir (12) actuates the low level sensor (26) .

6. Nebulizing system (10; 110) according to one of the previous claims, in which the second reservoir (14; 114) has a larger capacity than the first reservoir (12; 112).

7. Nebulizing system (10) according to any one of the previous claims, in which the second reservoir (14) comprises a liquid water intake (30) that is preferably a liquid water intake for the nebulizing system (10), the liquid water intake (30) preferably including a water filter.

8. Nebulizing system (10) according to any one of the previous claims, comprising an electronic control module (84).

9. Ventilation, heating and/or air conditioning device for a motor vehicle, comprising a nebulizing system (10; 110) according to any one of the previous claims.
